# EUROPÄISCHE PATENTANMELDUNG

(11) **EP 2 210 727 A2**
(43) Veröffentlichungstag der Anmeldung: **28.07.2010**
(21) Anmeldenummer: 10159617.9
(22) Anmeldetag: 05.09.2003
(51) Int. Cl.: B29B 9/06, B29B 9/16

(54) **Verfahren zur Granulierung von Kunststoffen**

(30) Priorität: 04.10.2002 DE 10246464; 16.01.2003 DE 10301382
(62) Teilanmeldung aus: 03807734.3
(71) Anmelder: EASTMAN CHEMICAL COMPANY, Kingsport TN 37660 (US)
(72) Erfinder: Kreyenborg, Jan-Udo, 48149, Münster (DE)
(74) Vertreter: Best, Michael

(57) **Zusammenfassung**

Die Erfindung schlägt ein Verfahren zur Granulierung von Kunststoffen vor, wobei die Granulation des Kunststoffes in einem Flüssigkeitsbad von über 100° C erfolgt. Weiterhin schlägt die Erfindung zwei Verfahren zur Nachkondensation von im amorphen Zustand vorliegenden Kunststoffgranulaten vor, um den Kunststoff in den kristallinen Zustand zu überführen, wobei einmal das in einem Granulator erzeugte Kunststoffgranulat unmittelbar nach Durchführen der Granulation für eine für die Kristallisation erforderliche Zeitspanne in einem Flüssigkeitsbad, vorzugsweise Wasserbad, mit einer Temperatur von über 100° C behandelt wird oder daß die Granulation des Kunststoffes in einem Flüssigkeitsbad von über 100° C erfolgt und das so erzeugte Kunststoffgranulat für eine für die Kristallisation erforderliche Zeitspanne in einem Flüssigkeitsbad, vorzugsweise Wasserbad, mit einer Temperatur von über 100° C behandelt wird.

## Beschreibung

Die Erfindung bezieht sich auf ein Verfahren zur Granulierung von Kunststoffen.

Alle bisher bekannten Kunststoffgranuliersysteme arbeiten mit Wassertemperaturen von unter 100° C, wodurch sie in ihrem Einsatzzweck und der Wirkungsweise für gewisse Aufgaben beschränkt sind.

Bei der Stranggranulierung werden die Kunststoffstränge entweder erst durch Luft in ein Wasserbad oder direkt aus einer Düse durch ein Wasserbad in die nachfolgende Granulierung geführt.

Bei einer Wasserringgranulierung wird das Material in relativ trockenem Zustand und endständig geschnitten und ggf. in ein Wasserbad gefördert.

Für niedrigviskose Kunststoffmaterialien ist die sogenannte Bandgranutierung bekannt, bei der tröpfchenweise Material auf ein Band gelangt, welches dann auf dem Band abgekühlt und in Granulatform gewonnen wird.

Bei der Untererwasserkopfgranulierung wird das Kunststoffmaterial unmittelbar nach Austreten aus einer Lochplatte oder Düsenplatte durch umlaufende Messer geschnitten und dann in einem Wasserstrom weitergefördert.

Bei der Granulierung von polymeren Kunststoffen ist die Viskosität ein entscheidendes Kriterium. Mehr und mehr technische Kunststoffe neigen zu einem sehr schnellen Einfrieren der Lochplattenlöcher, sofern die Kühlwirkung des vorbeifließenden Wassers stärker ist als die Beheizungskapazität in Verbindung mit der Eigenwärme des Polymers. Bei der Granulierung herrscht eine gewisse Temperaturdifferenz, die abhängig ist von dem Polymer und dessen Viskosität. Schon geringe Temperaturverluste im Kunststoff bewirken, daß der Kunststoff an Viskosität verliert.

Der Erfindung liegt also die Aufgabe zugrunde, ein Verfahren vorzuschlagen, bei welchem die Temperaturdifferenz zwischen dem zur Granulierung anstehenden bzw. granulierten Kunststoff und der bei der Granulation eingesetzten Flüssigkeit verringert wird.

Diese der Erfindung zugrundeliegende Aufgabe wird durch die Lehre des Hauptanspruches und des Anspruches 2 gelöst.

Im Stand der Technik sind sogenannte Nachkondensationsanlagen bekannt, mit deren Hilfe frisch granuliertes Granulat aus dem amorphen Zustand in den kristallinen Zustand überführt wird. Diese Anlagen sind ausgesprochen aufwendig, benötigen eine lange Verweilzeit und haben einen hohen Energieaufwand und somit auch hohe Investitionskosten.

Der Erfindung liegt weiterhin die Aufgabe zugrunde, frisches Granulat für einen definierten Zeitraum in entsprechend hoch temperiertem Wasser, das also eine Temperatur über 100° C aufweist, zu behandeln, um dadurch das amorphe Material in kristallines Material umzuwandeln.

Diese der Erfindung zugrundeliegende Aufgabe wird durch die Lehre des unabhängigen Anspruches 3 gelöst.

Eine weitere Lösung dieser der Erfindung zugrundeliegenden Aufgabe wird im Anspruch 4 definiert.

Vorteilhafte Ausgestaltungen dieser Lösungen sind in den Weiteren Unteransprüchen erläutert.

Mit anderen Worten ausgedrückt wird vorgeschlagen, daß entweder das in einem Granulator erzeugte Kunststoffgranulat unmittelbar nach Durchführen der Granulation für eine für die Kristallisation erforderliche Zeitspanne in einem Flüssigkeitsbad, vorzugsweise Wasserbad mit einer Temperatur von über 100° C behandelt wird.

Bei einem anderen erfindungsgemäßen Verfahren wird so vorgegangen, daß die Granulation des Kunststoffes in einem Wasserbad von über 100° C erfolgt und das erzeugte Kunststoffgranulat weiterhin für eine für die Kristallisation erforderliche Zeitspanne in einem Flüssigkeitsbad, vorzugsweise Wasserbad mit einer Temperatur von über 100° C behandelt wird.

Die Bereitstellung des Wasserbades mit einer Temperatur von über 100° C erfolgt dadurch, daß der Temperaturbereich des Wasserbades In einem druckgefäßartigen Drucksystem bereitgestellt wird, indem also die hohe Temperatur erreichbar ist, wobei gemäß einem weiteren Merkmal der Erfindung das Kunststoffgranulat in dem druckgefäßartigen Drucksystem über ein Fördermittel gefördert wird.

Leitet man das frisch erzeugte Granulat in ein Wasserbad, dessen Temperatur oberhalb von 100° C liegt, kann man die Nachkondensation auch in Wasser erreichen. Das Granulat wird dabei entweder über eine entsprechende Schleuse in das hochtemperierte Wasserbad geführt oder der Granulator selbst befindet sich bereits in einem hochtemperierten Wasserbad. Nach Durchführen der Nachkondensation wird das Granulat über entsprechende Schleusen, Sieb- und Filtereinriähtungen ausgetragen. Am Ende des Nachkondensationsreaktors kann das Granulat schnell in den Bereich von 60° oder ähnliches abgekühlt werden, so daß nunmehr in einem geschlossenen Kreislauf ein fertiges kristallines Produkt vorliegt.

Der Vorteil, das Granulat aus dem Reaktor nachfolgend in ein Wasserbad mit geringer Temperatur zu fördern, liegt auch darin, daß nachfolgend in die Atmosphäre kein Wasserdampf austritt, da dieser Wasserdampf vorher in einem sogenannten Kühlbehälter kondensiert werden kann.

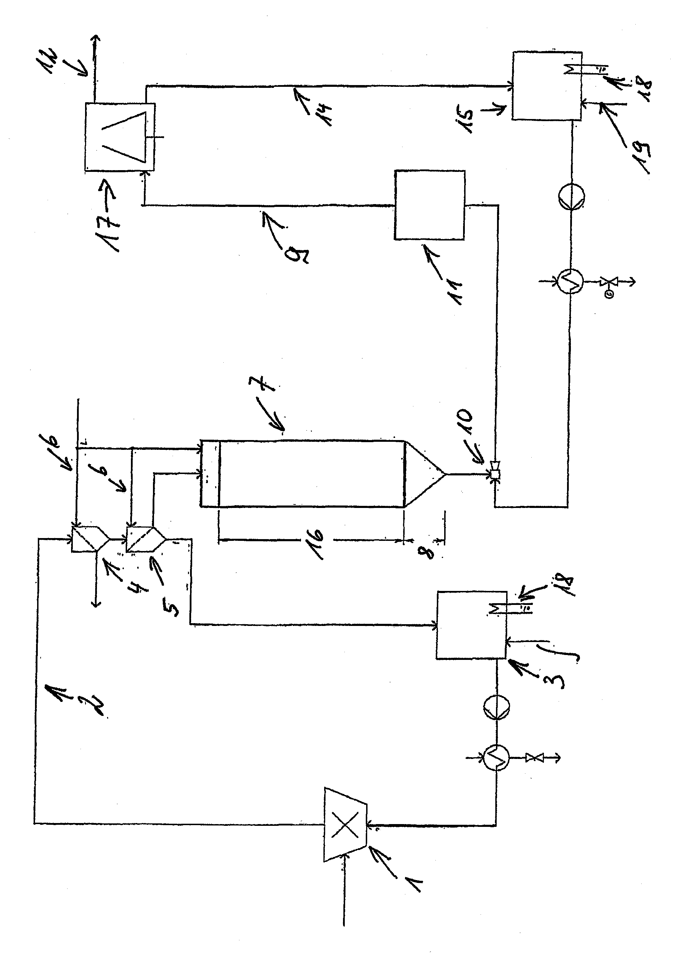

Ein Verfahrensschema zur möglichen Durchführung des Verfahrens wird nachfolgend anhand der Zeichnung erläutert.

In der Zeichnung ist eine Granulatoreinheit 1 dargestellt, in die die Kunststoffschmelze mit einer entsprechenden Temperatur und einem entsprechenden Druck eingegeben wird. Die Granulatoreinheit 1 ist in einen Druckwasserkreislauf 2 eingebaut, der über einen Druckwassererzeuger 3 mit Druckwassernachfüllungen gespeist wird.

Die im Granulator 1 erzeugten Granulate gelangen bei 4 in eine Trennvorrichtung, in der unerwünschte Granulafiklumpen ausgeschieden werden und die gewünschte Granulatfraktion zusammen mit dem Druckwasser unter entsprechendem Druck in einen zweiten Trennbehälter 5 gefördert wird. Sowohl im Trennbehälter 4 wie auch im Trennbehälter 5 wird über eine Druckleitung 6 eine entsprechende Druckhaltung erreicht.

Das Granulat aus dem Trennbehälter 5 gelangt in einen Verweilbehälter 7, während das Wasser aus dem Trennbehälter 5 zurück zum Druckwassererzeuger 3 geleitet wird, so daß hier ein in sich geschlossener Kreislauf geschaffen wird.

Der Verweilbehälter 7 bildet eine Kristallisationszone 16, wobei im unteren Bereich dieser Kristallisationszone 16 eine Kühlzone, wie bei 8 angedeutet, vorhanden sein kann.

Das Granulat, vermischt mit dem Wasser gelangt in einen zweiten Kreislauf 9, und zwar über eine Venturidüse 10 wird das Granulat zusammen mit dem Wasser in diesen Kreislauf 9 eingespeistt und wird dann in einer Druckabbauvorrichtung 11 so behandelt, daß der Druck auf etwa ± 1 bar heruntergesteuert wird.

Aus der Druckabbauvorrichtung 11 gelangt das Granulat mit dem Wasser in eine Trennzentrifuge 17, wobei bei 12 der Granulataustrag vorgesehen ist, während das abgetrennte Wasser über eine Leitung 14 zu einem Wasseraufbereiter 15 gelangt. Hier wird das Wasser erhitzt und das im Prozeßverlauf verlorene Wasser ergänzt.

Die für den Druckwassererzeuger 3 und den Wasseraufbereiter 15 erforderlichen Heizungen sind bei 18 und die Wasserzuführungsleitungen sind bei 19 erkennbar.

## Patentansprüche

1. Verfahren zur Granulierung von Kunststoffen, **dadurch gekennzeichnet, daß** die Granulation des Kunststoffes in einem Flüssigkeitsbad von über 100° C erfolgt.

2. Verfahren nach Anspruch 1, **dadurch gekennzeichnet, daß** als Flüssigkeitsbad ein Wasserbad eingesetzt wird.

3. Verfahren zur Nachkondensation von im amorphen Zustand vorliegenden Kunststoffgranulaten, um den Kunststoff in den kristallinen Zustand zu überführen, **dadurch gekennzeichnet, daß** das in einem Granulator erzeugte Kunststoffgranulat unmittelbar nach Durchführen der Granutation für eine für die Kristallisation erforderliche Zeitspanne in einem Flüssigkeitsbad, vorzugsweise Wasserbad mit einer Temperatur von über 100° C behandelt wird.

4. Verfahren zur Nachkondensation von im amorphen Zustand vorliegenden Kunststoffgranulaten, um den Kunststoff in den kristallinen Zustand zu überführen, **dadurch gekennzeichnet, daß** die Granulation des Kunststoffes in einem Flüssigkeitsbad, vorzugsweise Wasserbad von über 100° C erfolgt und das erzeugte Kunststoffgranulat für eine für die Kristallisation erforderliche Zeitspanne in einem Wasserbad mit einer Temperatur von über 100° C behandelt wird.

5. Verfahren nach Anspruch 1, 2, 3 oder 4, **dadurch gekennzeichnet, daß** der Temperaturbereich des Flüssigkeitsbades von über 100° C in einem druckgefäßartigen Drucksystem bereitgestellt wird.

6. Verfahren nach Anspruch 3 und 5, **dadurch gekennzeichnet, daß** das Kunststoffgranulat unmittelbar nach Durchführen der Granulation über eine Schleuse in das druckgefäßartige Drucksystem gefördert wird.

7. Verfahren nach Anspruch 3 und 6, **dadurch gekennzeichnet, daß** das Granulat vor Einführen in das druckgefäßartige Drucksystem einer Wasserabscheidung unterworfen wird.

8. Verfahren nach einem der vorhergehenden Ansprüche, **dadurch gekennzeichnet, daß** aus dem druckgefäßartigen Drucksystem das Kunststoffgranulat mit seiner Restfeuchtigkeit in einen Wasserbehälter mit einer Wassertemperatur von unter 100° C zwecks Abkühlung gefördert wird.

9. Verfahren nach einem oder mehreren der vorhergehenden Ansprüche, **dadurch gekennzeichnet, daß** das Kunststoffgranulat in dem druckgefäßartigen Drucksystem über ein Fördermittel gefördert wird.
